# EUROPEAN PATENT SPECIFICATION

(11) **EP 2 181 003 B1**
(45) Date of publication and mention of the grant of the patent: **14.08.2013**
(21) Application number: 08788420.1
(22) Date of filing: 22.08.2008
(51) Int. Cl.: B60F 3/00

(54) **AMPHIBIAN**
AMPHIBIENFAHRZEUG
ENGIN AMPHIBIE

(30) Priority: 24.08.2007 GB 0716582
(43) Date of publication of application: 05.05.2010
(73) Proprietor: Gibbs Technologies Ltd., Warwickshire CV11 4LY (GB)
(72) Inventor: GIBBS, Alan Timothy, London SW11 4PL (GB)
(74) Representative: Hicks, Paul Edward
(86) International application number: PCT/GB2008/002860
(87) International publication number: WO 2009/027647

(56) References cited:
- WO-A-2006/040563
- WO-A-2008/023191
- AU-B2- 700 280
- DE-A1- 19 831 324
- GB-A- 2 254 831
- GB-A- 2 392 415
- US-B1- 6 540 569
- US-B1- 7 207 851
- "Tricycle type amphibious vehicle - has propeller and retracting front wheels driven by pedals" WPI/THOMSON,, 1 January 1900 (1900-01-01), XP002458931 -& BE 896 799 A2 (VANDER DONCKT GEERT) 16 September 1983 (1983-09-16)

## Description

The invention relates to an amphibian, capable of travelling on water and on land.

Amphibians have been proposed and produced in various formats. Although amphibian bicycles have been proposed, the smallest engine driven amphibians have been motorcycles. Lehrberger (DE 19831324C2), Gong (US 6,540,569), and Buchanan (GB 2,254,831) all disclose designs for amphibian motorcycles.

Amphibians are dual purpose vehicles, and must therefore be equally usable on land as they are on water. Different classes of vehicle have different handling characteristics. Motorcycles are capable of fast acceleration and fast, steeply leaning cornering. The three machines described above, however, are heavy, wide, and bulbous in shape.

The addition to a motorcycle of equipment needed for travel on water leads to a large increase in weight. This additional weight will blunt performance on road, and reduce roadholding capability on corners. The width of the motorcycle must also be increased compared to the convention for a purely road machine, in order to provide both buoyancy and stability on water. This increased width limits the angle through which the machine can be leaned on corners on road. The additional weight and width will make the motorcycle feel cumbersome on road.

The present invention provides an amphibian according to claim 1. Thus, the amphibian is of a compact size, can rise rapidly onto the plane on water and is easy to handle on water.

Embodiments of the present invention will now be described, by way of example only, with reference to the accompanying drawings in which:
Figure 1 is a schematic underneath plan view of an amphibian of a first embodiment of the present invention;
Figure 2 is a side view of the amphibian of the first embodiment of the present invention; and
Figure 3 is a cut-away perspective view of the first embodiment of the present invention.

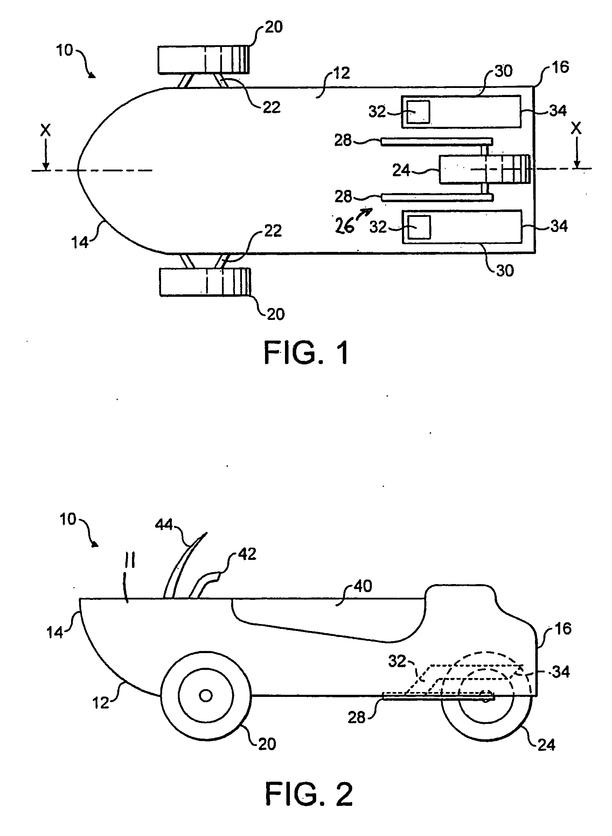

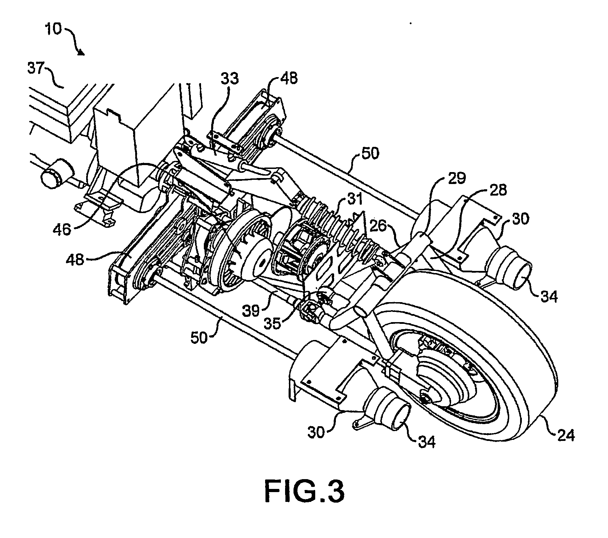

Referring to Figures 1, 2 and 3, an embodiment of the amphibian 10 is shown according to the present invention. The amphibian 10 comprises a buoyant "V" shaped hull 12. The hull 12 has a bow 14 and a stern 16. A body 11 is attached to the hull 12.

A pair of front wheels 20 are connected adjacent to the bow by front suspension 22. The front suspension 22 is preferably in the form of double wishbone suspension, or may alternatively be formed of any known type of suspension.

A single rear wheel 24 is connected adjacent to the stern by rear suspension 26. The rear suspension 26 is preferably in the form of a pair of rearwardly trailing arms 28, rotatably supporting the wheel 24 between them. The arms 28 are rotatably attached to the chassis by pivots 35 at their forward ends. The rearwardly trailing arms preferably form an A-frame. A laterally extending strut 29 connects the arms 28 and forms an apex of the A-frame. A coil spring over shock absorber unit 31 is connected to the strut 29 to allow damped suspension movement of the arms 28. Alternatively, the rear suspension may comprise a single trailing arm supporting the wheel 24.

The front suspension 22 and rear suspension 26 are retractable for use of the amphibian on water. The suspension 22,26 is preferably retractable over a waterline of the vehicle when on water. The suspension 22,26 can be protracted for use on land.

The front wheels 20 may be retracted by any known means. For example, hydraulic suspension struts can provide for damping of wheel movement and also retraction of the wheels. Such struts are known from US 2003/0047899 of the present Applicant. Alternatively, wheel retraction may be achieved with an actuator rotating part of the suspension assembly, for example as known from US 5,531,179 of Roycroft. Alternatively, the wheels 20 may be retracted by rotation of the wheel or suspension upright about a local axis of rotation so that the outer derside of the wheels when on land is directed to face downwardly over water

The rear wheel 24 may be retracted by an actuator 33, e.g. a hydraulic actuator or pneumatic actuator, preferably attached to the coil spring over shock absorber unit 31. The trailing arms 28 may be rotated upwardly around the pivot 35 by the actuator 33.

The amphibian 10 is propelled on water by water jet drives. The amphibian comprises two water jet drives 30. Each water jet drive 30 comprises a jet inlet 32, the jet inlet 32 preferably opening onto a bottom surface of the hull to take water in to the jet drive 30. Each jet drive 30 further comprises a jet nozzle 34, opening rearwardly. Water is expelled through the jet nozzles by an impeller to propel the amphibian 10 on water.

The two water jet drives 30 are offset laterally from a centreline X-X of the amphibian 10. The water jet drives 30 are located symmetrically about the centreline X-X. The water jet drives 30 are located outwardly of the rear wheel 24, such that water expelled from the water jet drives 30 passes either side of the rear wheel 24, when said wheel is protracted.

The water jet drives 30 are powered by a power source in the amphibian, preferably by an engine 37, e.g. an internal combustion engine. The output of the engine 37 is connected to a gearbox 46. The gearbox 46 may be a continuously variable transmission (CVT). The gearbox 46 is operably connected to a driveshaft 39, the driveshaft 39 connected to the rear wheel to drive the rear wheel. The output of the gearbox 46 is preferably on or near the longitudinal axis of the amphibian.

The engine also drives two belt drives 48, each belt drive 48 extending laterally outwardly from the vehicle centreline. Each belt drive comprises an endless belt looped around two spaced apart supporting wheels. Each belt drive 48 drives a driveshaft 50, the driveshafts 50 extending rearwardly and substantially parallel to the longitudinal axis of the amphibian. Each driveshaft 50 is connected to and drives the impeller of one of the water jet drives 30. Each water jet is therefore independently (i.e. separately) driven. Each water jet is driven from a common power source.

Alternatively, the driveshafts may be connected to the gearbox by gears, in particular, bevel gears.

The front wheels 20 are preferably not driven when the amphibian 10 is on land. Alternatively, the front wheels 20 may be driven by the same power source as the water jet drives 30. Alternatively, the front wheels 20 may be driven by a power source separate from the power source driving the water jet drives 30. The separate power source may be a second engine (e.g. internal combustion engine) or an electric motor. The rear wheel may be driven in addition to the front wheels 20, either from the same power source as the water jet drives 30 or from the separate power source.

Although twin jets may be assumed to be heavier than a single jet drive, a surprising result occurs when comparing the two layouts. To provide equivalent performance from twin jets as from one jet, the twin jets will be specified as being of smaller diameter than the equivalent single jet. This reduces the tip speed of the jet blades compared to the single jet drive; which makes the twin jets less liable to cavitation at speed. It is also found that as forces at the tips of the blades go up as the square of the rotational speed, a smaller jet can be built more lightly than a single jet, because it is of smaller diameter. Hence, twin jets may in themselves be lighter than a single jet drive; and may still be lighter overall, even when a more complex transmission is necessarily specified than for a single jet drive.

An advantage of twin jets is that the amphibian can rise rapidly onto the plane on water, perhaps one or two seconds faster than an equivalent machine with a single jet drive. The drawbacks of twin jets are in cost, and packaging; and a reduction in top speed on water due to the increased pumping losses through the additional jet drive. The top speed might, for example, be reduced by four knots for a compact amphibian.

A twin jet machine will be easier to ride, less ultimately fast but more relaxing.

The amphibian 10 is a ride-on amphibian, in which a driver sits astride the body 11 of the amphibian. A seat 40 is located on the body 11, on which the driver can sit. The seat 40 may be large enough to seat a passenger behind the rider. One or more recesses (not shown) may be provided in seat 40 to allow the rider and/or passenger(s) to "step through" the seat.

The driver steers the amphibian through handlebars 42. The handlebars are connected to the front wheels 20 for steering the amphibian on land, and connected to a rudder or other steering means for steering the amphibian on water. Alternatively, a steering wheel may be used in place of the handlebars, for steering the amphibian 10 on land and water.

The seat 40 is located above the power source which provides power to the water jet drives and/or the wheels. A windscreen 44 may extend upwardly from the body 11, for spray and weather protection.

The amphibian 10 has been described as having two jet drives. Alternatively, the amphibian 10 may have three or more jet drives. Each jet drive is preferably driven by a driveshaft as described above.

It will be noted from the above description that unlike the prior art by Buchanan, Gong, Lehrberger, and Grzech (US 5 690 046), the amphibian according to the invention does not have body parts (e.g., wheel covers) which move when the amphibian changes mode from road to marine or vice versa. Such moving body parts have been proposed in numerous prior patents - even with four wheels, as in US 4,958,584 to Williamson - but they are rarely seen on production vehicles. They add weight, cost, and complexity; and are liable to be troublesome when they encounter real world obstacles to progress, such as sand, driftwood, and corrosion. The applicant has found when testing prototype amphibians that surprisingly, the reduction in planing area caused by leaving open a wheel well for a single rear wheel is more than compensated for by the greater ease with which the amphibian rises onto the plane when the weight of movable wheel covers and their associated drive mechanisms does not have to be lifted onto the plane.

To express this arrangement of "no moving body parts" another way, all road wheels are exposed to water when retracted by the retractable suspension.

It is considered that a combination of two front and one rear road wheels with twin jet marine drives provides an ideal combination of accessible marine performance, failsafe road stability, and carrying capacity. These characteristics may be combined with ride on seating, which provides best visibility in all directions; and being aligned with the longitudinal centre line of the vehicle, gives good lateral weight distribution, even when there is only the driver on the vehicle.

The use of two front wheels offers good stability on road, while twin jet drives can be easily packaged either side of the single rear wheel. This is in contrast to US 5,690,046 to Grzech, where the single front wheel requires complex retraction arrangements and the twin rear wheels only allow use of a single jet drive. Furthermore, it is commonly agreed that Grzech's layout of one front and two rear wheels is not the most stable on land.

The following clauses describe further preferred aspects of the present invention:
1. An amphibian capable of travel on land and on water, provided with a body and a planing hull, and two front road wheels and a single rear road wheel mounted on retractable suspension which may be protracted for road use, or retracted for use on water;
   and further comprising ride-on seating for at least one rider to sit astride the body,
   wherein marine propulsion is provided by at least two jet drives.
2. An amphibian according to clause 1, where no part of the body or hull changes position when the retractable suspension protracts or retracts.
3. An amphibian according to clause 1, where the amphibian has a land mode and a marine mode, and where no part of the body or hull changes position in changing from land mode to marine mode or vice versa.
4. An amphibian according to clause 1, where all road wheels are exposed to water when the retractable suspension is retracted.
5. An amphibian according to clause 1, comprising two spaced apart jet drives, wherein each jet drive is offset laterally from a centreline of the amphibian.
6. An amphibian according to clause 5 comprising a power source, wherein each jet drive is driven by a belt drive connected to the power source.
7. An amphibian according to any one of the preceding clauses wherein each jet drive is driven by a driveshaft extending substantially parallel to a centreline of the amphibian.
8. An amphibian according to clause 7 comprising a power source, wherein each driveshaft is driven by a belt drive connected to the power source.
9. An amphibian according to clause 8 wherein the power source is connected to each belt drive substantially at a centreline of the amphibian, the belt drives extending laterally outwardly in opposite directions from the centreline to the driveshafts.
10. An amphibian according to any one of the preceding clauses wherein an intake of each jet drive is on an underside of the hull.
11. An amphibian according to any of the preceding clauses, comprising a first power source providing power for travel on both land and water.
12. An amphibian according to any one of clauses 1 to 10, comprising a first power source providing power for travel on land and a second power source for providing power for travel on water.
13. An amphibian according to clause 10 or 11 wherein seating for at least one person is located above the first power source.
14. An amphibian according to any one of clauses 11 to 13 wherein the first power source is an engine.
15. An amphibian according to any one of the preceding clauses, comprising handlebars for providing steering control of the amphibian.
16. An amphibian according to any one of clauses 1 to 14, comprising a steering wheel for providing steering control of the amphibian.
17. An amphibian according to any of the above clauses, comprising a windscreen.
18. An amphibian substantially as hereinbefore described with reference to and as shown in any one or more of the accompanying Figures.

## Claims

1. An amphibian (10) capable of travel on land and on water, provided with a body (11) and a planing hull (12), and two front road wheels (20) and a single rear road wheel (24) each mounted on a respective retractable suspension (22, 26) which may be protracted for road use, or retracted for use on water;
and further comprising ride-on seating (40) for at least one rider to sit astride the body (11),
wherein marine propulsion is provided by at least two jet drives (30).

2. An amphibian according to claim 1, where no part of the body or hull changes position when the retractable suspensions protract or retract.

3. An amphibian according to claim 1, where the amphibian has a land mode and a marine mode, and where no part of the body or hull changes position in changing from land mode to marine mode or vice versa.

4. An amphibian according to claim 1, where all road wheels (20, 24) are exposed to water when the retractable suspensions are retracted.

5. An amphibian according to claim 1, comprising two spaced apart jet drives (30), wherein each jet drive is offset laterally from a centreline of the amphibian.

6. An amphibian according to claim 5 comprising a power source (37), wherein each jet drive (30) is driven by a belt drive (48) connected to the power source (37).

7. An amphibian according to any one of the preceding claims wherein each jet drive (30) is driven by a driveshaft (50) extending substantially parallel to a centreline of the amphibian.

8. An amphibian according to claim 7 comprising a power source (37), wherein each driveshaft (50) is driven by a belt drive (48) connected to the power source.

9. An amphibian according to claim 8 wherein the power source (37) is connected to each belt drive (48) substantially at a centreline of the amphibian, the belt drives (48) extending laterally outwardly in opposite directions from the centreline to the driveshafts (50).

10. An amphibian according to any one of the preceding claims wherein an intake (32) of each jet drive (30) is on an underside of the hull.

11. An amphibian according to any of the preceding claims, comprising a first power source providing power for travel on both land and water.

12. An amphibian according to any one of claims 1 to 10, comprising a first power source providing power for travel on land and a second power source for providing power for travel on water.

13. An amphibian according to claim 10 or 11 wherein seating for at least one person is located above the first power source.

14. An amphibian according to any one of claims 11 to 13 wherein the first power source is an engine.

15. An amphibian according to any one of the preceding claims, comprising handlebars (42) for providing steering control of the amphibian or comprising a steering wheel for providing steering control of the amphibian.

## Patentansprüche

1. Amphibium (10), das in der Lage ist, auf Land und auf Wasser zu fahren, versehen mit einem Körper (11) und einem Gleitrumpf (12), und zwei vorderen Straßenrädern (20) und einem einzelnen hinteren Straßenrad (24), die jeweils an einer jeweiligen einziehbaren Aufhängung (22, 26) angebracht sind, die zum Gebrauch auf der Straße ausgefahren oder zum Gebrauch auf dem Wasser eingezogen werden kann;
und das ferner einen Aufsitzsattel (40) für zumindest einen Fahrer aufweist, um rittlings auf dem Körper (11) zu sitzen,
worin ein Schiffsvortrieb durch zumindest zwei Strahlantriebe (30) vorgesehen ist.

2. Amphibium nach Anspruch 1, worin kein Teil des Körpers oder des Rumpfs die Position wechselt, wenn die einziehbaren Aufhängungen ausgefahren oder eingezogen sind.

3. Amphibium nach Anspruch 1, worin das Amphibium einen Land-Modus und einen Schiffs-Modus hat, und worin beim Wechsel vom Land-Modus zum Schiffs-Modus oder umgekehrt kein Teil des Körpers oder des Rumpfs die Position ändert.

4. Amphibium nach Anspruch 1, worin alle Straßenräder (20, 24) zum Wasser freiliegen, wenn die einziehbaren Aufhängungen eingezogen sind.

5. Amphibium nach Anspruch 1, das zwei mit Abstand voneinander angeordnete Strahlantriebe (30) aufweist, worin jeder Strahlantrieb von einer Mittellinie des Amphibiums seitlich versetzt ist.

6. Amphibium nach Anspruch 5, das eine Antriebsquelle (37) aufweist, worin jeder Strahlantrieb (30) von einem Riemenantrieb (48) angetrieben ist, der mit der Antriebsquelle (37) verbunden ist.

7. Amphibium nach einem der vorhergehenden Ansprüche, worin jeder Strahlantrieb (30) von einer Antriebswelle (50) angetrieben ist, die sich im Wesentlichen parallel zur Mittellinie des Amphibiums erstreckt.

8. Amphibium nach Anspruch 7, das eine Antriebsquelle (37) aufweist, worin jede Antriebswelle (50) von einem Riemenantrieb (48) angetrieben ist, der mit der Antriebsquelle verbunden ist.

9. Amphibium nach Anspruch 8, worin die Antriebsquelle (37) mit jedem Riemenantrieb (48) im Wesentlichen in der Mittellinie des Amphibiums verbunden ist, wobei sich die Riemenantriebe (48) seitlich auswärts in entgegengesetzte Richtungen von der Mittellinie zu den Antriebswellen (50) hin erstrecken.

10. Amphibium nach einem der vorhergehenden Ansprüche, worin sich ein Einlass (32) jedes Strahlantriebs (30) an einer Unterseite des Rumpfs befindet.

11. Amphibium nach einem der vorhergehenden Ansprüche, das eine erste Antriebsquelle aufweist, die Kraft für die Fahrt sowohl auf Land als auch auf Wasser liefert.

12. Amphibium nach einem der Ansprüche 1 bis 10, das eine erste Antriebsquelle aufweist, die Kraft für die Fahrt auf dem Land liefert, sowie eine zweite Antriebsquelle zum Liefern von Kraft für die Fahrt auf dem Wasser.

13. Amphibium nach Anspruch 10 oder 11, worin der Sitz für zumindest eine Person über der ersten Antriebsquelle angeordnet ist.

14. Amphibium nach einem der Ansprüche 11 bis 13, worin die erste Antriebsquelle ein Motor ist.

15. Amphibium nach einem der vorhergehenden Ansprüche, das Lenkstangen (42) zum Vorsehen der Lenksteuerung des Amphibiums aufweist, oder ein Lenkrad zum Vorsehen der Lenksteuerung des Amphibiums aufweist.

## Revendications

1. Engin amphibie (10) capable de se déplacer sur terre et sur l'eau, pourvu d'un corps (11) et d'une coque planante (12), et de deux roues avant (20) et d'une seule roue arrière (24) montées chacune sur une suspension rétractable respective (22, 26) qui peut être déployée en cas d'utilisation sur la route, ou rétractée en cas d'utilisation sur l'eau ;
et comprenant en outre un siège permettant de s'asseoir à cheval (40) permettant à au moins un conducteur de s'asseoir à califourchon sur le corps (11) ;
dans lequel une propulsion marine est assurée par au moins deux propulsions par jet (30).

2. Engin amphibie selon la revendication 1, où aucune partie du corps ou de la coque ne change de position lorsque les suspensions rétractables se déploient ou se rétractent.

3. Engin amphibie selon la revendication 1, où l'engin amphibie a un mode terrestre et un mode marin, et où aucune partie du corps ou de la coque ne change de position lors du changement du mode terrestre au mode marin ou vice versa.

4. Engin amphibie selon la revendication 1, où toutes les roues (20, 24) sont exposées à l'eau lorsque les suspensions rétractables sont rétractées.

5. Engin amphibie selon la revendication 1, comprenant deux propulsions par jet espacées (30) ; où chaque propulsion par jet est décalée latéralement par rapport à une ligne centrale de l'engin amphibie.

6. Engin amphibie selon la revendication 5, comprenant une source d'énergie (37), où chaque propulsion par jet (30) est entraînée par une transmission par courroie (48) reliée à la source d'énergie (37).

7. Engin amphibie selon l'une quelconque des revendications précédentes, dans lequel chaque propulsion par jet (30) est entraînée par un arbre d'entraînement (50) s'étendant de manière essentiellement parallèle à une ligne centrale de l'engin amphibie.

8. Engin amphibie selon la revendication 7, comprenant une source d'énergie (37), où chaque arbre d'entraînement (50) est entraîné par une transmission par courroie (48) reliée à la source d'énergie.

9. Engin amphibie selon la revendication 8, dans lequel la source d'énergie (37) est reliée à chaque transmission par courroie (48) essentiellement au niveau d'une ligne centrale de l'engin amphibie, les transmissions par courroie (48) s'étendant latéralement vers l'extérieur dans des directions opposées de la ligne centrale aux arbres d'entraînement (50).

10. Engin amphibie selon l'une quelconque des revendications précédentes, dans lequel une prise d'admission (32) de chaque propulsion par jet (30) se trouve sur une face inférieure de la coque.

11. Engin amphibie selon l'une des revendications précédentes, comprenant une première source d'énergie fournissant de l'énergie pour se déplacer à la fois sur terre et sur l'eau.

12. Engin amphibie selon l'une quelconque des revendications 1 à 10, comprenant une première source d'énergie fournissant de l'énergie pour se déplacer sur terre et une deuxième source d'énergie pour fournir de l'énergie pour se déplacer sur l'eau.

13. Engin amphibie selon la revendication 10 ou 11, dans lequel un siège pour au moins une personne est situé au-dessus de la première source d'énergie.

14. Engin amphibie selon l'une quelconque des revendications 11 à 13, dans lequel la première source d'énergie est un moteur.

15. Engin amphibie selon l'une quelconque des revendications précédentes, comprenant des poignées de guidon (42) permettant d'assurer la commande de direction de l'engin amphibie ou comprenant un volant pour assurer la commande de direction de l'engin amphibie.
